(19) Europäisches Patentamt / European Patent Office / Office européen des brevets

(11) **EP 3 055 635 B1**

(12) **EUROPÄISCHE PATENTSCHRIFT**

(45) Veröffentlichungstag und Bekanntmachung des Hinweises auf die Patenterteilung:
**16.08.2017   Patentblatt 2017/33**

(21) Anmeldenummer: **14789770.6**

(22) Anmeldetag: **07.10.2014**

(51) Int Cl.:
*F25D 3/04* (2006.01)   *F28D 20/00* (2006.01)
*F28D 20/02* (2006.01)

(86) Internationale Anmeldenummer:
**PCT/CH2014/000145**

(87) Internationale Veröffentlichungsnummer:
**WO 2015/051474 (16.04.2015 Gazette 2015/15)**

(54) **ISOLATIONSZEITBESTIMMUNGSVORRICHTUNG FÜR EINEN WÄRMEISOLATIONSBEHÄLTER**

INSULATION-TIME DETERMINING DEVICE FOR A THERMALLY INSULATED CONTAINER

DISPOSITIF DE DÉTERMINATION DU TEMPS D'ISOLATION POUR UN RÉCIPIENT À ISOLATION THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2013   CH 17342013**

(43) Veröffentlichungstag der Anmeldung:
**17.08.2016   Patentblatt 2016/33**

(73) Patentinhaber: **REP IP AG**
**6317 Oberwil bei Zug (CH)**

(72) Erfinder: **ROS, Nico**
**CH-4052 Basel (CH)**

(74) Vertreter: **Bohest AG**
**Holbeinstrasse 36-38**
**4051 Basel (CH)**

(56) Entgegenhaltungen:
**EP-A2- 2 482 021       WO-A1-99/06781**
**AT-B- 382 636          DE-A1- 10 058 938**
**DE-A1-102007 037 856   DE-C1- 10 235 581**
**DE-U1-202012 103 715   DE-U1-202012 103 716**

**Beschreibung**

Die vorliegende Erfindung betrifft eine Isolationszeitbestimmungsvorrichtung für einen Wärmeisolationsbehälter mit einem Latentwärmespeicher und ein Verfahren zur Bestimmung einer mit einem Sicherheitskorrekturfaktor versehenen maximalen Isolationszeit eines Wärmeisolationsbehälters mit einem Latentwärmespeicher.

Insbesondere für den Transport temperatursensibler Waren, wie z. B. Medikamenten, werden heutzutage Wärmeisolationsbehälter eingesetzt, die nach Einlagerung der Waren geschlossen in Flugzeugen, Fahrzeugen und/oder Schiffen transportiert werden, wobei die Wärmeisolationsbehälter immer wieder umgelagert werden. Um die Temperatur im Innenraum des Wärmeisolationsbehälters in einem bestimmten Temperaturbereich zu halten, gibt es aktive und passive Systeme.

Unter aktiven Systemen werden einerseits Systeme verstanden, welche mittels mechanischen Kühlaggregaten die Temperatur kontrollieren. Andererseits werden auch solche Systeme als aktiv bezeichnet, welche unter Einsatz von Peltier-Elementen mittels elektrischen Stroms direkt Temperaturdifferenzen erzeugen, durch welche der Innenraum des Wärmeisolationsbehälters in einem bestimmten Temperaturbereich gehalten werden kann. Ein Nachteil aktiver Systeme ist, dass sie elektrischen Strom für ihren Betrieb benötigen.

Bei einem bekannten passiven System, wie es beispielsweise in der WO 2012/142639 A1 beschrieben ist, wird der physikalische Effekt des Phasenübergangs eines Materials benutzt, um die Temperatur in einem bestimmten Bereich zu halten. Beim Phasenübergang zwischen den Aggregatszuständen "flüssig" und "fest" eines sogenannten Phasenwechselmaterials ("Phase Change Material", PCM), der innerhalb eines bestimmten Temperaturbereichs abläuft, wird vom Phasenwechselmaterial beim Phasenübergang von fest zu flüssig deutlich mehr Energie aufgenommen bzw. beim Phasenübergang von flüssig zu fest abgegeben als in einem gleich grossen Temperaturbereich ausserhalb des Phasenübergangs. Bei Phasenwechselmaterialien ist allgemein die latente Schmelzwärme, Lösungswärme oder Absorptionswärme wesentlich grösser als die Wärme, die sie aufgrund ihrer normalen spezifischen Wärmekapazität (ohne den Phasenumwandlungseffekt) speichern können.

Die WO 2012/142639 A1 offenbart einen Wärmeisolationsbehälter mit einem Latentwärmespeicher, der ein geeignetes Phasenwechselmaterial umfasst, das in Hohlräumen der Behälterwandung um den Behälterinnenraum herum angeordnet ist. Der Latentwärmespeicher absorbiert bei Erwärmung die zugeführte Energie durch den fest-flüssig-Phasenübergang und stellt bei Abkühlung entzogene Energie durch den flüssigfest-Phasenübergang bereit.

Ein Latentwärmespeicher ist allgemein eine Einrichtung, die thermische Energie verborgen, verlustarm, mit vielen Wiederholzyklen und über lange Zeit speichern kann. Latentwärmespeicher funktionieren durch die Ausnutzung der Enthalpie thermodynamischer Zustandsänderungen eines Speichermediums. Das dabei am häufigsten genutzte Prinzip ist die Ausnutzung des Phasenübergangs fest-flüssig und umgekehrt. Die AT382636 B und die EP2482021 A2 offenbaren Ladezustandbestimmungsvorrichtungen für einen Wärmeisolationsbehälter mit einem Latentwärmespeicher, bei den der Ladezustand anhand einer Widerstand- oder Druckmessung gemessen wird und auf einer Ladeanzeige angezeigt wird. Beim Transport von temperatursensibler Ware in einem Wärmeisolationsbehälter ist es wichtig zu wissen, wie lange die Temperatur der Ware im Wärmeisolationsbehälter in Abhängigkeit von der Aussentemperatur im zulässigen Bereich gehalten werden kann. Dieses Wissen ermöglicht es, den Transport hinsichtlich der Route, der Dauer, der Verkehrsmittel und allfälliger Zwischenlagerung, also verschiedenen Aussentemperatur-Szenarien, optimal zu planen.

Bisher wird die maximale Isolationszeit von Wärmeisolationsbehältern mit einem Latentwärmespeicher durch Validierungstests bestimmt. Bei einem Validierungstest wird für ein bestimmtes Aussentemperatur-Profil gemessen, wie lange der zulässige Temperaturbereich gehalten werden kann. Hierzu werden zum Beispiel Temperaturprofile der International Safe Transit Association (ista) verwendet. Oftmals werden auch die Temperaturen bei realen Transporten von Waren auf einer Route gemessen, um die äusseren Einflüsse des Transports zu berücksichtigen.

Sowohl die Validierung mittels Standard-Aussentemperatur-Profilen als auch die Messung von realen Transporten haben aber den Nachteil, dass sie das Verhalten des Systems mit nur einem oder wenigen Aussentemperatur-Szenarien abbilden. Das Verhalten des Systems bei abweichenden Szenarien kann lediglich basierend auf den vorliegenden Testergebnissen inter- oder extrapoliert werden. Da jeder reale Transport aber einem anderen Temperaturverlauf ausgesetzt ist, sind solche Tests zur Vorbereitung des Transports aus den genannten Gründen nur bedingt geeignet. Darüber hinaus sind die genannten Tests lediglich dafür geeignet, ein "bestanden/nicht bestanden"-Ergebnis zu liefern, und erlauben keine weitergehende Beurteilung, wie gut der Test bestanden wurde, also wie viel Sicherheitsreserve bei einem Transport vorhanden wäre, geschweige denn wie diese erhöht werden könnte.

Der vorliegenden Erfindung liegt daher die Aufgabe zugrunde, ein verlässliches und universell anwendbares System zur Bestimmung einer mit einem Sicherheitskorrekturfaktor versehenen maximalen Isolationszeit eines Wärmeisolationsbehälters mit einem Latentwärmespeicher zu schaffen.

Diese Aufgabe wird durch die erfindungsgemässe Isolationszeitbestimmungsvorrichtung gemäss dem unabhängigen Patentanspruch 1 und das erfindungsgemässe Verfahren zur Bestimmung einer mit einem Sicherheitskorrekturfaktor versehenen maximalen Isolationszeit gemäss dem unabhängigen Patentanspruch 7 gelöst. Bevorzugte Ausführungsvarianten ergeben sich aus den abhängigen Patentansprüchen.

Eine erfindungsgemässe Isolationszeitbestimmungsvorrichtung für einen Wärmeisolationsbehälter mit einem Latentwärmespeicher umfasst:

- eine Energieberechnungseinrichtung zur Berechnung der im Latentwärmespeicher gespeicherten thermischen Energie aus mindestens einem Zustandsparameter des Wärmeisolationsbehälters oder dessen Innenraums,
- eine Anzeigeeinrichtung zum Anzeigen der berechneten gespeicherten thermischen Energie oder einer damit korrelierten Grösse,
- eine Eingabeeinrichtung zur Eingabe eines Aussentemperaturverlaufs, und
- eine Isolationszeitberechnungseinrichtung, mit welcher aus der berechneten gespeicherten thermischen Energie oder einer damit korrelierten Grösse und aus dem eingegebenen Aussentemperaturverlauf ausserhalb des Wärmeisolationsbehälters eine mit einem Sicherheitskorrekturfaktor versehene maximale Isolationszeit des Wärmeisolationsbehälters berechenbar ist, innerhalb welcher im Innenraum des Wärmeisolationsbehälters ein vorgegebener Temperaturbereich weder unterschritten noch überschritten wird.

Wie lange die Temperatur im Innenraum des Wärmeisolationsbehälters bei einem gegebenen Aussentemperaturverlauf im zulässigen Bereich gehalten werden kann, hängt unter anderem von der im Latentwärmespeicher gespeicherten thermischen Energie ab. Für die Bestimmung der maximalen Isolationszeit ist daher die Bestimmung der im Latentwärmespeicher gespeicherten thermischen Energie aus mindestens einem Zustandsparameter des Wärmeisolationsbehälters oder dessen Innenraums wesentlich. Dies erfolgt erfindungsgemäss mittels der Energieberechnungseinrichtung zur Berechnung der im Latentwärmespeicher gespeicherten thermischen Energie aus mindestens einem Zustandsparameter des Wärmeisolationsbehälters oder dessen Innenraums. Mittels der Anzeigeeinrichtung zum Anzeigen der berechneten gespeicherten thermischen Energie oder einer damit korrelierten Grösse kann dann diese Energie oder eine damit korrelierte Grösse angezeigt werden.

Eine mit der berechneten gespeicherten thermischen Energie korrelierte Grösse ist beispielsweise die Temperatur des Phasenwechselmaterials des Latentwärmespeichers. Der Phasenübergang des Phasenwechselmaterials erfolgt nämlich nicht plötzlich und vollständig bei einer Temperatur $T_{Phase}$, sondern in einem Temperaturbereich [$T_{fest}$, $T_{flüssig}$], wobei der Aggregatszustand des Phasenwechselmaterials unter der Temperatur $T_{fest}$ fest und über der Temperatur $T_{flüssig}$ flüssig ist und die Speicherung von Energie im Phasenübergang temperaturabhängig ist. Anhand der Temperatur lässt sich bestimmen, welcher Anteil des Phasenübergangs stattgefunden hat, also wie viel gespeicherte thermische Energie vorhanden ist, und umgekehrt. Somit sind die gespeicherte thermische Energie und die Temperatur des Phasenwechselmaterials eineindeutig korreliert.

Eine weitere mit der berechneten gespeicherten thermischen Energie korrelierte Grösse ist beispielsweise die maximale Isolationszeit, wenn der Aussentemperaturverlauf bekannt ist.

Bei gegebenem Aussentemperaturverlauf zeigt daher die Anzeigeeinrichtung vorteilhafterweise zusätzlich zur gespeicherten thermischen Energie oder auch ohne diese die maximale Isolationszeit oder eine mit einem Sicherheitskorrekturfaktor versehene maximale Isolationszeit an. Der Aussentemperaturverlauf muss hierzu natürlich vorgängig in der Isolationszeitbestimmungsvorrichtung definiert werden, was beispielsweise durch Eingabe über eine Eingabeeinrichtung erfolgen kann.

Das Versehen der maximalen Isolationszeit mit einem Sicherheitskorrekturfaktor ermöglicht das Einhalten des vorgegebenen Temperaturbereichs in der Praxis, wo die einzelnen Parameter und Variablen gar nicht genau bestimmt werden können. Damit können auch Inhomogenitäten des Wärmeisolationsbehälters oder in der Temperaturverteilung um den Wärmeisolationsbehälter herum oder im Innenraum des Wärmeisolationsbehälters aufgefangen werden.

Die Isolationszeitberechnungseinrichtung und die Energieberechnungseinrichtung können physisch durch dieselbe Einrichtung realisiert sein, beispielsweise einen Prozessor eines Computers.

Bei einer bevorzugten Ausführungsvariante ist der mindestens eine Zustandsparameter des Wärmeisolationsbehälters oder dessen Innenraums, aus der die im Latentwärmespeicher gespeicherte thermische Energie berechnet wird, mindestens eine Temperatur im Innenraum des Wärmeisolationsbehälters.

Wie bereits weiter oben dargelegt, sind die gespeicherte thermische Energie und die Temperatur des Phasenwechselmaterials eineindeutig korreliert. Die Temperatur im Innenraum des Wärmeisolationsbehälters entspricht ungefähr der Temperatur des Phasenwechselmaterials, wobei aber normalerweise im Innenraum die Temperatur nicht überall genau gleich gross ist, sondern sich eine Temperaturverteilung ergibt. Zur Berechnung der im Latentwärmespeicher gespeicherten thermischen Energie werden daher vorzugsweise mehrere Temperaturen aus verschiedenen Bereichen des Innenraums des Wärmeisolationsbehälters verwendet oder es wird diejenige Temperatur verwendet, die für die Berechnung der maximalen Isolationszeit am ungünstigsten ist, um auf der sicheren Seite zu sein.

Zur Bestimmung der mindestens einen Temperatur im Innenraum des Wärmeisolationsbehälters weist die Isolationszeitbestimmungsvorrichtung mit Vorteil mindestens einen Temperatursensor auf. Dies ermöglicht die Ermittlung mindestens einer realen Temperatur im Innenraum des Wärmeisolationsbehälters.

Alternativ können auch eine oder mehrere fiktive Temperaturen für den Innenraum des Wärmeisolationsbehälters in die Isolationszeitbestimmungsvorrichtung eingegeben werden, beispielsweise über eine Eingabeeinrichtung. Auf diese Weise können die gespeicherte thermische Energie und allenfalls auch die mit einem Sicherheitskorrekturfaktor versehene maximale Isolationszeit eines Wärmeisolationsbehälters theoretisch berechnet werden. Dies ermöglicht es, den Transport des Wärmeisolationsbehälters hinsichtlich der Route, der Dauer, der Verkehrsmittel und allfälliger Zwischenlagerung, also verschiedenen Aussentemperatur-Szenarien, optimal zu planen. Die erfindungsgemässe Isolationszeitbestimmungsvorrichtung kann so als Transportplaner eingesetzt werden.

Bei einer alternativen Ausführungsvariante weist die erfindungsgemässe Isolationszeitbestimmungsvorrichtung eine Einrichtung zur Bestimmung des elektrischen Widerstands des Phasenwechselmaterials als Zustandsparameter des Wärmeisolationsbehälters auf. Im festen Zustand hat das Phasenwechselmaterial einen anderen elektrischen Widerstand als im flüssigen. Daher kann über den elektrischen Widerstand bestimmt werden, wie viel Phasenwechselmaterial sich in welchem Aggregatszustand befindet, also wie viel gespeicherte thermische Energie vorhanden ist.

Bei einer weiteren alternativen Ausführungsvariante weist die erfindungsgemässe Isolationszeitbestimmungsvorrichtung eine Einrichtung zur Bestimmung der optischen Dichte des Phasenwechselmaterials als Zustandsparameter des Wärmeisolationsbehälters auf. Die optische Dichte des Phasenwechselmaterials verändert sich beim Phasenübergang, so dass über sie bestimmt werden kann, wie viel Phasenwechselmaterial sich in welchem Aggregatszustand befindet, also wie viel gespeicherte thermische Energie vorhanden ist.

Die erfindungsgemässe Isolationszeitberechnungseinrichtung kann als dedizierte Isolationszeitberechnungseinrichtung ausgebildet sein oder z. B. über einen auch andersartig verwendbaren Computer realisiert sein, der mit einer entsprechenden Software versehen ist oder beispielsweise über das Internet auf eine entsprechende Software Zugriff hat, wobei dieser Computer mit Zusatzeinrichtungen, wie z. B. mit Temperatursensoren, in Verbindung stehen kann.

Bei einer vorteilhaften Ausführungsvariante der erfindungsgemässen Isolationszeitbestimmungsvorrichtung ist die Anzeigeeinrichtung am Wärmeisolationsbehälter angeordnet. Auf diese Weise kann eine Art Ladezustandsanzeige des Latentwärmespeichers des Wärmeisolationsbehälters realisiert werden.

Am Wärmeisolationsbehälter können auch weitere Teile der Isolationszeitbestimmungsvorrichtung angeordnet sein, die es ermöglichen, mit einem Sicherheitskorrekturfaktor versehene maximale Isolationszeiten des Wärmeisolationsbehälters für verschiedene Szenarien direkt am Wärmeisolationsbehälter zu berechnen und anzuzeigen.

Allgemein ist eine wichtige mögliche Anwendung der erfindungsgemässen Isolationszeitbestimmungsvorrichtung der Einsatz als Transportplaner.

Bei einem erfindungsgemässen Verfahren zur Bestimmung einer mit einem Sicherheitskorrekturfaktor versehenen maximalen Isolationszeit eines Wärmeisolationsbehälters mit einem Latentwärmespeicher wird aus mindestens einem Zustandsparameter des Wärmeisolationsbehälters oder dessen Innenraums die im Latentwärmespeicher gespeicherte thermische Energie berechnet. Dann wird aus dieser berechneten gespeicherten thermischen Energie und aus einem vorgegebenen Aussentemperaturverlauf ausserhalb des Wärmeisolationsbehälters die mit einem Sicherheitskorrekturfaktor versehene maximale Isolationszeit des Wärmeisolationsbehälters berechnet, innerhalb welcher im Innenraum des Wärmeisolationsbehälters ein vorgegebener Temperaturbereich weder unterschritten noch überschritten wird.

Wie bereits oben im Zusammenhang mit der Isolationszeitbestimmungsvorrichtung erläutert, ermöglicht das erfindungsgemässe Verfahren das Einhalten des vorgegebenen Temperaturbereichs in der Praxis und die optimale Planung des Transports des Wärmeisolationsbehälters hinsichtlich der Route, der Dauer, der Verkehrsmittel und allfälliger Zwischenlagerung, also verschiedenen Aussentemperatur-Szenarien.

Bei bevorzugten Ausführungsvarianten des erfindungsgemässen Verfahrens ist der mindestens eine Zustandsparameter mindestens eine Temperatur im Innenraum des Wärmeisolationsbehälters oder der elektrische Widerstand oder die optische Dichte eines Phasenwechselmaterials des Latentwärmespeichers. Vorzugsweise werden mehrere Temperaturen aus verschiedenen Bereichen des Innenraums des Wärmeisolationsbehälters als Zustandsparameter verwendet oder es wird diejenige Temperatur verwendet, die für die Berechnung der maximalen Isolationszeit am ungünstigsten ist, um auf der sicheren Seite zu sein.

Mit Vorteil wird die Berechnung der mit einem Sicherheitskorrekturfaktor versehenen maximalen Isolationszeit des Wärmeisolationsbehälters aus der gespeicherten thermischen Energie und aus einem vorgegebenen Aussentemperaturverlauf ausserhalb des Wärmeisolationsbehälters durch vorgängige Vergleichsmessungen mit dem Wärmeisolationsbehälter kalibriert. Diese Kalibration ermöglicht die Anpassung der Berechnung an den realen Wärmeisolationsbehälter und somit eine genauere Berechnung mit einer geringeren Sicherheitsmarge.

Vorzugsweise wird zur Berechnung der mit einem Sicherheitskorrekturfaktor versehenen maximalen Isolationszeit des Wärmeisolationsbehälters die kleinste Zahl n berechnet, ab welcher

$$E_{t_0} + \sum_{i=1}^{n} \Delta E_i(\Delta T_i \cdot \gamma_+(\Delta T_i), \Delta t_i \cdot \gamma(\Delta t_i), \Omega \cdot \gamma(\Omega)) > E_{max} \cdot \gamma(E_{max})$$

4

erreicht wird, und durch $t_{max+} = \sum_{i=1}^{n} \Delta t_i$ $t_{max+}$ wird eine mit einem Sicherheitskorrekturfaktor versehene maximale Isolationszeit des Wärmeisolationsbehälters $t_{max+}$ berechnet, innerhalb welcher im Innenraum des Wärmeisolationsbehälters eine wählbare maximal zulässige Temperatur $T_{max}$ nicht überschritten wird, wobei:

$E_{t_0}$: gespeicherte thermische Energie zum Anfangszeitpunkt $t_0$;

$E_{max}$ : maximal zulässige gespeicherte thermische Energie, welche einer wählbaren maximal zulässigen Temperatur $T_{max}$ entspricht;

$$\Delta t_i = t_i - t_{i-1};$$

$t_i$: Zeitpunkt i nach Anfangszeitpunkt $t_0$;

$\Delta T_i = T_{ex_i} - T_{in_i}$: Temperaturdifferenz zwischen Aussentemperatur $T_{ex_i}$ und Innentemperatur $T_{in_i}$ des Wärmeisolationsbehälters im Zeitintervall $\Delta t_i$, wobei bei unterschiedlichen Aussentemperaturen $T_{ex_i}$ um den Wärmeisolationsbehälter herum und/oder unterschiedlichen Innentemperaturen $T_{in_i}$ innerhalb des Wärmeisolationsbehälters im Zeitintervall $\Delta t_i$ jeweils eine Aussentemperatur $T_{ex_i}$ und eine Innentemperatur $T_{in_i}$ gewählt wird;

$\Omega$: Energiefluss vom Innenraum des Wärmeisolationsbehälters nach draussen oder umgekehrt pro Kelvin und Sekunde;

$\Delta E_i(\Delta T_i \cdot \gamma_+(\Delta T_i), \Delta t_i \cdot \gamma(\Delta t_i), \Omega \cdot \gamma(\Omega))$: Differenz der gespeicherten thermischen Energien zu den Zeitpunkten $t_i$ und $t_{i-1}$ in Abhängigkeit von der Temperaturdifferenz $\Delta T_i$ und dem Energiefluss pro Kelvin und Sekunde $\Omega$;

$\gamma+(\Delta T_i) \geq 1$ für positive $\Delta T_i$ und $\gamma_+(\Delta T_i) \leq 1$ für negative $\Delta T_i$:

Sicherheitskorrekturfaktor für $\Delta T_i$;

$\gamma(\Delta t_i) \geq 1$: Sicherheitskorrekturfaktor für $\Delta t_i$;

$\gamma(\Omega) \geq 1$: Sicherheitskorrekturfaktor für $\Omega$;

$\gamma(E_{max}) \leq 1$: Sicherheitskorrekturfaktor für $E_{max}$.

Bevorzugt wird zur Berechnung der mit einem Sicherheitskorrekturfaktor versehenen maximalen Isolationszeit des Wärmeisolationsbehälters die kleinste Zahl m berechnet wird, ab welcher

$$E_{t_0} + \sum_{i=1}^{m} \Delta E_i\left(\Delta T_i \cdot \gamma_-(\Delta T_i), \Delta t_i \cdot \gamma(\Delta t_i), \Omega \cdot \gamma(\Omega)\right) < E_{min} \cdot \gamma(E_{min})$$

erreicht wird, und durch $t_{max-} = \sum_{i=1}^{m} \Delta t_i$ wird eine mit einem Sicherheitskorrekturfaktor versehene maximale Isolationszeit des Wärmeisolationsbehälters $t_{max-}$ berechnet, innerhalb welcher im Innenraum des Wärmeisolationsbehälters eine wählbare minimal zulässige Temperatur $T_{min}$ nicht unterschritten wird, wobei:

$E_{t_0}$: gespeicherte thermische Energie zum Anfangszeitpunkt $t_0$;

$E_{min}$ : minimal zulässige gespeicherte thermische Energie, welche einer wählbaren minimal zulässigen Temperatur $T_{min}$ entspricht;

$$\Delta t_i = t_i - t_{i-1};$$

$t_i$: Zeitpunkt i nach Anfangszeitpunkt $t_0$;

$\Delta T_i = T_{ex_i} - T_{in_i}$: Temperaturdifferenz zwischen Aussentemperatur $T_{ex_i}$ und Innentemperatur $T_{in_i}$ des Wärmeisolationsbehälters im Zeitintervall $\Delta t_i$, wobei bei unterschiedlichen Aussentemperaturen $T_{ex_i}$ um den Wärmeisolationsbehälter herum und/oder unterschiedlichen Innentemperaturen $T_{in_i}$ innerhalb des Wärmeisolationsbehälters im Zeitintervall $\Delta t_i$ jeweils eine Aussentemperatur $T_{ex_i}$ und eine Innentemperatur $T_{in_i}$ gewählt wird;

| | |
|---|---|
| $\Omega$: | Energiefluss vom Innenraum des Wärmeisolationsbehälters nach draussen oder umgekehrt pro Kelvin und Sekunde; |
| $\Delta E_i(\Delta T_i \cdot \gamma_-(\Delta T_i), \Delta t_i \cdot \gamma(\Delta t_i), \Omega \cdot \gamma(\Omega))$: | Differenz der gespeicherten thermischen Energien zu den Zeitpunkten $t_i$ und $t_{i-1}$ in Abhängigkeit von der Temperaturdifferenz $\Delta T_i$ und dem Energiefluss pro Kelvin und Sekunde $\Omega$; |
| $\gamma_-(\Delta T_i) \geq 1$ | für negative $\Delta T_i$ und $\gamma_-(\Delta T_i) \leq 1$ für positive $\Delta T_i$: |
| | Sicherheitskorrekturfaktor für $\Delta T_i$; |
| $\gamma(\Delta t_i) \geq 1$: | Sicherheitskorrekturfaktor für $\Delta t_i$; |
| $\gamma(\Omega) \geq 1$: | Sicherheitskorrekturfaktor für $\Omega$; |
| $\gamma(E_{min}) \geq 1$: | Sicherheitskorrekturfaktor für $E_{min}$. |

Insbesondere bei Fällen, bei denen sowohl positive als auch negative Temperaturdifferenzen $\Delta T_i$ zwischen Aussentemperaturen $T_{ex_i}$ und Innentemperaturen $T_{in_i}$ auftreten, sollte sowohl die mit einem Sicherheitskorrekturfaktor versehene maximale Isolationszeit des Wärmeisolationsbehälters $t_{max+}$ berechnet werden, innerhalb welcher im Innenraum des Wärmeisolationsbehälters eine wählbare maximal zulässige Temperatur $T_{max}$ nicht überschritten wird, als auch die mit einem Sicherheitskorrekturfaktor versehene maximale Isolationszeit des Wärmeisolationsbehälters $t_{max-}$, innerhalb welcher im Innenraum des Wärmeisolationsbehälters eine wählbare minimal zulässige Temperatur $T_{min}$ nicht unterschritten wird. Die mit einem Sicherheitskorrekturfaktor versehene maximale Isolationszeit des Wärmeisolationsbehälters $t_{max}$, innerhalb welcher im Innenraum des Wärmeisolationsbehälters ein vorgegebener Temperaturbereich weder unterschritten noch überschritten wird, ist dann die kleinere der beiden Isolationszeiten $t_{max+}$ und $t_{max-}$.

Wie erwähnt, ist $\Delta T_i = T_{ex_i} - T_{in_i}$ die Temperaturdifferenz zwischen Aussentemperatur $T_{ex_i}$ und Innentemperatur $T_{in_i}$ des Wärmeisolationsbehälters im Zeitintervall $\Delta t_i$, wobei bei unterschiedlichen Aussentemperaturen $T_{ex_i}$ um den Wärmeisolationsbehälter herum und/oder unterschiedlichen Innentemperaturen $T_{in_i}$ innerhalb des Wärmeisolationsbehälters im Zeitintervall $\Delta t_i$ für die Berechnung jeweils eine Aussentemperatur $T_{ex_i}$ und eine Innentemperatur $T_{in_i}$ gewählt wird. Vorzugsweise werden für die Berechnung der im Latentwärmespeicher gespeicherten thermischen Energie die Aussentemperatur $T_{ex_i}$ und die Innentemperatur $T_{in_i}$ gewählt, die für die Berechnung der maximalen Isolationszeit am ungünstigsten sind, um auf der sicheren Seite zu sein. Alternativ werden Mittelwerte verwendet.

Die Differenz $\Delta E_i(\Delta T_i \cdot \gamma_+(\Delta T_i, \Delta t_i \cdot \gamma(\Delta t_i), \Omega \cdot \gamma(\Omega))$ bzw. $\Delta E_i(\Delta T_i \cdot \gamma_-(\Delta T_i), \Delta t_i \cdot \gamma(\Delta t_i), \Omega \cdot \gamma(\Omega))$ der gespeicherten thermischen Energien zu den Zeitpunkten $t_i$ und $t_{i-1}$ ist eine Funktion der Temperaturdifferenz $\Delta T_i$, des Zeitintervalls $\Delta t_i$ und des Energieflusses vom Innenraum des Wärmeisolationsbehälters nach draussen oder umgekehrt pro Kelvin und Sekunde $\Omega$. Letzterer hängt vom Wärmeisolationsbehälter ab, insbesondere von der Ausgestaltung von dessen Wandung, der Grösse und dem Isolationsmaterial, und wird vorzugsweise durch Kalibriermessungen bestimmt.

Die Differenz $\Delta E_i(\Delta T_i \cdot \gamma_+(\Delta T_i), \Delta t_i \cdot \gamma(\Delta t_i), \Omega \cdot \gamma(\Omega))$ bzw. $\Delta E_i(\Delta T_i \cdot \gamma_-(\Delta T_i \cdot \gamma(\Delta t_i), \Omega \cdot \gamma(\Omega))$ ist positiv, wenn die Aussentemperatur $T_{ex_i}$ grösser als die Innentemperatur $T_{in_i}$ ist, und negativ, wenn die Aussentemperatur $T_{ex_i}$ kleiner als die Innentemperatur $T_{in_i}$ ist. Dies bedeutet, dass dem Latentwärmespeicher je nach Temperaturverhältnis entweder Energie zugeführt oder Energie entnommen wird.

Die in der Funktion relevanten Grössen $\Delta t_i$, $\Delta t_i$ und $\Omega$ sind alle mit einem Sicherheitskorrekturfaktor $\gamma_+(\Delta T_i)$ oder $\gamma_-(\Delta T_i)$, $\gamma(\Delta t_i)$ bzw. $\gamma(\Omega)$ versehen, um Ungenauigkeiten in der Bestimmung dieser Grössen, Inhomogenitäten, Risiken wie die Alterung des Isolationsmaterials etc. so zu kompensieren, dass der vorgegebene Temperaturbereich sicher weder unterschritten noch überschritten wird.

Die Sicherheitskorrekturfaktoren $\gamma_+(\Delta T_i)$ und $\gamma_-(\Delta T_i)$ unterscheiden sich deswegen, damit bei der Berechnung der mit Sicherheitskorrekturfaktoren versehenen maximalen Isolationszeiten des Wärmeisolationsbehälters $t_{max+}$ bzw. $t_{max-}$ die Sicherheitskorrektur jeweils für jedes Zeitintervall in die richtige Richtung erfolgt.

Die Sicherheitskorrekturfaktoren $\gamma_+(\Delta T_i)$ bzw. $\gamma_-(\Delta T_i)$ können für verschiedene Temperaturdifferenzen $\Delta T_i$ unterschiedlich sein, um beispielsweise extreme Aussentemperaturen mit einem höheren Sicherheitszuschlag versehen zu können. Ebenfalls können die Sicherheitskorrekturfaktoren $\gamma(\Delta t_i)$ für verschiedene Zeitintervalle $\Delta t_i$ unterschiedlich sein, um beispielsweise längere Laufzeiten mit einem höheren Sicherheitszuschlag versehen zu können.

Neben diesen in die Differenz $\Delta E_i(\Delta T_i \cdot \gamma_+(\Delta T_i, \Delta t_i \cdot \gamma(\Delta t_i), \Omega \cdot \gamma(\Omega))$ bzw. $\Delta E_i(\Delta T_i \cdot \gamma_-(\Delta T_i), \Delta t_i \cdot \gamma(\Delta t_i), \Omega \cdot \gamma(\Omega))$ einfliessenden Sicherheitskorrekturfaktoren $\gamma_+(\Delta T_i)$ oder $\gamma_-(\Delta T_i, \gamma(\Delta t_i)$ bzw. $\gamma(\Omega)$ werden die maximal zulässige gespeicherte thermische Energie $E_{max}$ mit dem Sicherheitskorrekturfaktor $\gamma(E_{max})$ und die minimal zulässige gespeicherte thermische Energie $E_{min}$ mit dem Sicherheitskorrekturfaktor $\gamma(E_{min})$ multipliziert, welche Sicherheitskorrekturfaktoren einen von der Energie $E_{max}$ bzw. $E_{min}$ abhängigen globalen Sicherheitszuschlag bewirken.

Es ist nicht notwendig, alle diese Sicherheitskorrekturfaktoren von 1 verschieden zu wählen. Insbesondere können bei genügend kleinem globalem Sicherheitskorrekturfaktor $\gamma(E_{max})$ und bei genügend grossem globalem Sicherheitskorrekturfaktor $\gamma(E_{min})$ die übrigen Sicherheitskorrekturfaktoren als 1 gewählt werden, was die Berechnung vereinfacht. Andererseits können auch bei geeigneter Festsetzung der Sicherheitskorrekturfaktoren $y_+(\Delta T_i)$, $\gamma_-(\Delta T_i)$, $\gamma(\Delta t_i)$ und $\gamma(\Omega)$ die globalen Sicherheitskorrekturfaktoren $\gamma(E_{max})$ und $\gamma(E_{min})$ als 1 gewählt werden, was im Allgemeinen eine genauere Berechnung der mit Sicherheitskorrekturfaktoren versehenen maximalen Isolationszeiten des Wärmeisolationsbehälters $t_{max+}$, $t_{max-}$ bzw. $t_{max}$ ermöglicht.

Vorzugsweise ist

$$\Delta E_i(\Delta T_i \cdot \gamma_+(\Delta T_i), \Delta t_i \cdot \gamma(\Delta t_i), \Omega \cdot \gamma(\Omega)) = \Delta T_i \cdot \gamma_+(\Delta T_i) \cdot \Delta t_i \cdot \gamma(\Delta t_i) \cdot \Omega \cdot \gamma(\Omega)$$

und/oder

$$\Delta E_i(\Delta T_i \cdot \gamma_-(\Delta T_i), \Delta t_i \cdot \gamma(\Delta t_i), \Omega \cdot \gamma(\Omega)) = \Delta T_i \cdot \gamma_-(\Delta T_i) \cdot \Delta t_i \cdot \gamma(\Delta t_i) \cdot \Omega \cdot \gamma(\Omega).$$

Dies ermöglicht eine einfache Berechnung von $\Delta E_i$.

Die Sicherheitskorrekturfaktoren und der Energiefluss vom Innenraum des Wärmeisolationsbehälters nach draussen oder umgekehrt pro Kelvin und Sekunde $\Omega$ werden mit Vorteil durch vorgängige Kalibriermessungen mit dem Wärmeisolationsbehälter bestimmt. Die Kalibriermessungen werden vorzugsweise für verschiedene Temperaturszenarien durchgeführt. Auf diese Weise können für jeden Wärmeisolationsbehälter optimale Sicherheitskorrekturfaktoren und Energieflusswerte pro Kelvin und Sekunde $\Omega$ bestimmt werden.

Ausserdem gilt, dass zur Erhöhung der Genauigkeit der Berechnungen die Zeitintervalle $\Delta t_i$ verkleinert werden können.

Im Folgenden werden die erfindungsgemässe Isolationszeitbestimmungsvorrichtung und das erfindungsgemässe Verfahren zur Bestimmung einer mit einem Sicherheitskorrekturfaktor versehenen maximalen Isolationszeit eines Wärmeisolationsbehälters mit einem Latentwärmespeicher anhand eines in den Zeichnungen dargestellten Ausführungsbeispiels beschrieben. Es zeigen:

Fig. 1 -    eine Perspektivansicht eines Wärmeisolationsbehälters mit abgenommener Vorderwand;

Fig. 2 -    den Wärmeisolationsbehälter von Fig. 1 im geschlossenen Zustand mit schematisch dargestellter dedizierter Isolationszeitberechnungseinrichtung;

Fig. 3 -    den Wärmeisolationsbehälter von Fig. 2 mit angedeuteten Temperatursensoren; und

Fig. 4 -    ein Temperaturverlaufsdiagramm.

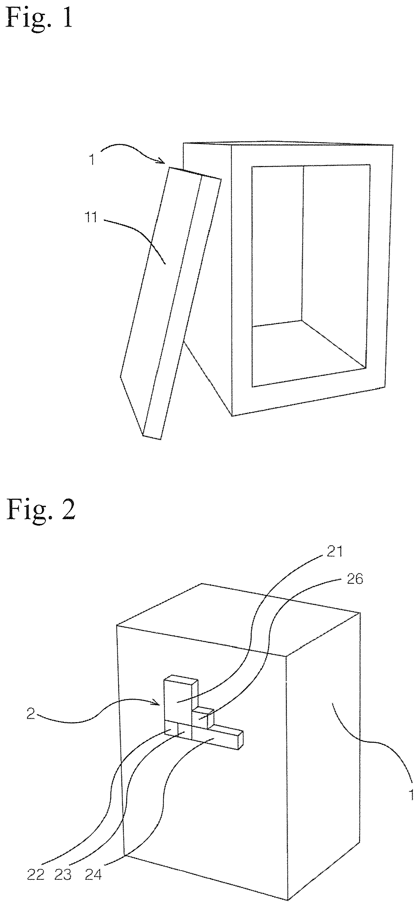

Fig. 1 zeigt einen Wärmeisolationsbehälter 1 mit aus Isolierelementen bestehenden Wänden, wobei die Vorderwand 11 vom Rest des Wärmeisolationsbehälters 1 abgenommen ist, so dass dieser befüllt werden kann. Die Isolierelemente enthalten Phasenwechselmaterial, welches als Latentwärmespeicher dient. Derartige Wärmeisolationsbehälter 1 sind an sich bekannt.

In Fig. 2 ist der Wärmeisolationsbehälter 1 von Fig. 1 im geschlossenen Zustand dargestellt. An diesem Wärmeisolationsbehälter 1 ist ein Ausführungsbeispiel einer erfindungsgemässen Isolationszeitbestimmungsvorrichtung 2 zur Bestimmung einer mit einem Sicherheitskorrekturfaktor versehenen maximalen Isolationszeit des Wärmeisolationsbehälters 1 angebracht. Die Isolationszeitbestimmungsvorrichtung 2 umfasst eine Anzeigeeinrichtung 21, eine Energieberechnungseinrichtung 22, eine Isolationszeitberechnungseinrichtung 23, eine Eingabeeinrichtung 24 und einen Aussentemperatursensor 26, die hier nur schematisch dargestellt sind. Die Energieberechnungseinrichtung 22 und die Isolationszeitberechnungseinrichtung 23 können auch gemeinsam in einer Berechnungseinheit, beispielsweise einem Computerprozessor, realisiert sein.

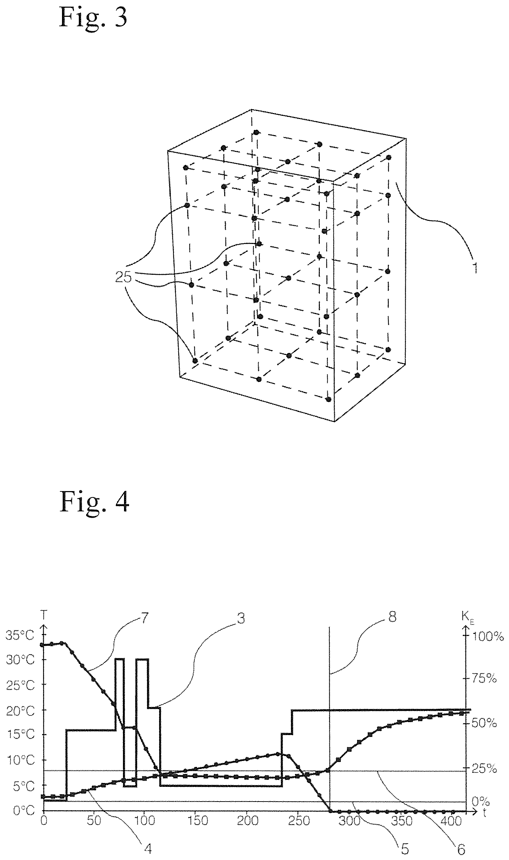

Fig. 3 zeigt den Wärmeisolationsbehälter 1 von Fig. 2 mit einer Vielzahl von angedeuteten Temperatursensoren 25, die im Innenraum des Wärmeisolationsbehälters 1 verteilt angeordnet sind. Die Temperatursensoren 25 liefern Temperaturwerte des Innenraums des Wärmeisolationsbehälters 1 für die Berechnung der im Latentwärmespeicher gespeicherten thermischen Energie und sind zu diesem Zweck über nicht dargestellte Kabel oder drahtlos mit der Energieberechnungseinrichtung 22 verbunden.

Normalerweise liefern die oben im Wärmeisolationsbehälter 1 angeordneten Temperatursensoren 25 die höchsten und die unten im Wärmeisolationsbehälter 1 angeordneten Temperatursensoren 25 die tiefsten Messwerte. Damit der geforderte Temperaturbereich im ganzen Innenraum des Wärmeisolationsbehälters 1 eingehalten wird, wird daher für die Energieberechnung jeweils der ungünstigste Temperaturwert verwendet werden, d. h. wenn die Überschreitung der maximal zulässigen Temperatur kritisch ist, ein Messwert eines oben im Wärmeisolationsbehälter 1 angeordneten Temperatursensors 25, und wenn die Unterschreitung der minimal zulässigen Temperatur kritisch ist, ein Messwert eines unten im Wärmeisolationsbehälter 1 angeordneten Temperatursensors 25. Alternativ kann auch ein Mittelwert verwendet werden, dann müssen aber die Sicherheitskorrekturfaktoren $\gamma_+(\Delta T_i)$ oder $y_-(\Delta T_i)$ für $\Delta T_i$ entsprechend ungünstiger gewählt werden.

Nach der Kalibrierung der Isolationszeitbestimmungsvorrichtung 2 für einen bestimmten Wärmeisolationsbehälter 1 kann diese als Ladezustandsanzeige des Latentwärmespeichers des Wärmeisolationsbehälters 1 dienen und beispielsweise folgende Informationen anzeigen:

- eine oder mehrere Innenraumtemperaturen,
- die Aussentemperatur,
- die im Latentwärmespeicher gespeicherte thermische Energie oder eine damit korrelierte aktuell noch vorhandene Energieaufnahmekapazität und/oder Energieabgabekapazität des Latentwärmespeichers,
- die Zeit für verschiedene Aussentemperaturen, bis die maximale Energieaufnahmekapazität und/oder Energieabgabekapazität erreicht ist, welche für die betreffenden Aussentemperaturen der maximalen Isolationszeit entspricht, und/oder
- andere korrelierte Informationen.

Die Isolationszeitbestimmungsvorrichtung kann auch als Transportplaner verwendet werden, indem über die Eingabeeinrichtung 24 verschiedene Temperaturszenarien eingegeben werden, die verschiedenen Transportszenarien entsprechen, und so versucht wird, ein bezüglich maximaler Isolationszeit und Sicherheitsreserven optimales Transportszenario zu finden.

Für den Einsatz als Transportplaner werden die Temperatursensoren 25 und 26 nicht benötigt, wenn das System kalibriert ist. Anstelle der Isolationszeitbestimmungsvorrichtung 2 kann für diesen Zweck daher auch eine Isolationszeitbestimmungsvorrichtung verwendet werden, die weder am Wärmeisolationsbehälter 1 angeordnet noch mit diesem verbunden ist, beispielsweise ein gewöhnlicher, auch andersartig verwendbarer Computer, der mit einer entsprechenden Software versehen ist oder beispielsweise über das Internet auf eine entsprechende Software Zugriff hat.

Fig. 4 zeigt ein Temperaturverlaufsdiagramm für ein beispielhaftes Aussentemperatur-Szenario, wie es z. B. auf einer Anzeigeeinrichtung 21 oder einem Computermonitor dargestellt sein könnte. Die Zeitachse verläuft horizontal, während die Temperatur- und die Energiekapazitäts-Achsen vertikal verlaufen.

Mit 3 ist der Aussentemperaturverlauf, mit 4 der Verlauf des Mittelwerts der Temperatur im Innenraum des Wärmeisolationsbehälters 1, mit 5 die gewählte minimal zulässige Temperatur $T_{min}$ (hier 2 °C), mit 6 die gewählte maximal zulässige Temperatur $T_{max}$ (hier 8 °C) und mit 7 der Verlauf der Energieaufnahmekapazität $K_E$ des Latentwärmespeichers bezeichnet.

Die Energieaufnahmekapazität $K_E$ hängt einerseits von der Grösse des Latentwärmespeichers und andererseits davon ab, wie viel thermische Energie aktuell gespeichert ist. Je mehr thermische Energie bereits gespeichert ist, d. h. je weiter der Phasenübergang des Phasenwechselmaterials von fest zu flüssig bereits fortgeschritten ist, desto kleiner ist die verbleibende Energieaufnahmekapazität $K_E$. Die Energieaufnahmekapazität $K_E$ ist in Fig. 4 in % angegeben, wobei 0 % so definiert wurde, dass bei 0 % Energieaufnahmekapazität $K_E$ die im Latentwärmespeicher gespeicherte thermische Energie der maximal zulässigen Temperatur $T_{max}$ entspricht, und 100 % so definiert wurde, dass bei 100 % Energieaufnahmekapazität $K_E$ die im Latentwärmespeicher gespeicherte thermische Energie einer Vorkonditionierungs-Temperatur des Wärmeisolationsbehälters 1 von 3 °C entspricht. Diese Energieaufnahmekapazitäts-Skala ist relativ und Werte über 100 % oder unter 0 % sind grundsätzlich möglich. Andere Energieaufnahmekapazitäts-Skalen sind prinzipiell auch wählbar.

Die Innentemperaturkurve 4 ergibt sich aus einer Vielzahl von Messungen, die alle 10 Sekunden vorgenommen wurden. Die Energieaufnahmekapazität $K_E$ ist über die gespeicherte thermische Energie mit der Innentemperatur T korreliert, so dass jedem Innentemperaturwert T ein Energieaufnahmekapazitätswert $K_E$ entspricht, woraus sich die Energieaufnahmekapazitätskurve 7 ergibt.

Im dargestellten Beispiel startet der Wärmeisolationsbehälter 1 bei der Anfangszeit $t_0 = 0$ Stunden mit einer Innentemperatur T von 4 °C und wird zunächst einer Aussentemperatur von 2 °C ausgesetzt, was zu einer Senkung der Innentemperatur und einem Anstieg der Energieaufnahmekapazität $K_E$ führt. Danach wird die Aussentemperatur auf 16 °C erhöht, was zu einem Anstieg der Innentemperatur und einer Senkung der Energieaufnahmekapazität $K_E$ führt. Mit dem vorgegebenen Aussentemperaturverlauf 3 ergeben sich die Innentemperaturkurve 4 und die Energieaufnahmekapazitätskurve 7.

Die vertikale Linie 8 zeigt an, dass nach ca. 273 Stunden die Innentemperatur die maximal zulässige Temperatur $T_{max}$ von 8 °C überschreitet, d. h. die maximale Isolationszeit für das dargestellte Szenario ist ca. 273 Stunden. Zu diesem Zeitpunkt erreicht auch die Energieaufnahmekapazität $K_E$ 0 %, wobei in der Darstellung gemäss Fig. 4 darunterliegende Werte auf 0 % korrigiert wurden.

Zu den vorbeschriebenen Isolationszeitbestimmungsvorrichtungen und Verfahren sind weitere Variationen realisierbar. Insbesondere ist zu erwähnen, dass die im Latentwärmespeicher gespeicherte thermische Energie auch mit Grössen korreliert, die nicht erwähnt wurden, und die auch berechnet und angezeigt werden könnten.

**Patentansprüche**

1. Isolationszeitbestimmungsvorrichtung (2) für einen Wärmeisolationsbehälter (1) mit einem Latentwärmespeicher, **gekennzeichnet durch**:

   - eine Energieberechnungseinrichtung (22) zur Berechnung der im Latentwärmespeicher gespeicherten thermischen Energie aus mindestens einem Zustandsparameter des Wärmeisolationsbehälters (1) oder dessen Innenraums,
   - eine Anzeigeeinrichtung (21) zum Anzeigen der berechneten gespeicherten thermischen Energie oder einer damit korrelierten Grösse,
   - eine Eingabeeinrichtung (24) zur Eingabe eines Aussentemperaturverlaufs, und
   - eine Isolationszeitberechnungseinrichtung (23), mit welcher aus der berechneten gespeicherten thermischen Energie oder einer damit korrelierten Grösse und aus dem eingegebenen Aussentemperaturverlauf ausserhalb des Wärmeisolationsbehälters (1) eine mit einem Sicherheitskorrekturfaktor versehene maximale Isolationszeit des Wärmeisolationsbehälters (1) berechenbar ist, innerhalb welcher im Innenraum des Wärmeisolationsbehälters (1) ein vorgegebener Temperaturbereich weder unterschritten noch überschritten wird.

2. Isolationszeitbestimmungsvorrichtung (2) nach Anspruch 1, **dadurch gekennzeichnet, dass** der mindestens eine Zustandsparameter mindestens eine Temperatur im Innenraum des Wärmeisolationsbehälters (1) ist.

3. Isolationszeitbestimmungsvorrichtung (2) nach Anspruch 2, **dadurch gekennzeichnet, dass** sie mindestens einen Temperatursensor (25) zur Bestimmung mindestens einer Temperatur im Innenraum des Wärmeisolationsbehälters (1) aufweist.

4. Isolationszeitbestimmungsvorrichtung (2) nach einem der Ansprüche 1 bis 3, **dadurch gekennzeichnet, dass** der Latentwärmespeicher ein Phasenwechselmaterial umfasst und die Isolationszeitbestimmungsvorrichtung (2) eine Einrichtung zur Bestimmung des elektrischen Widerstands des Phasenwechselmaterials als Zustandsparameter des Wärmeisolationsbehälters (1) aufweist.

5. Isolationszeitbestimmungsvorrichtung (2) nach einem der Ansprüche 1 bis 3, **dadurch gekennzeichnet, dass** der Latentwärmespeicher ein Phasenwechselmaterial umfasst und die Isolationszeitbestimmungsvorrichtung (2) eine Einrichtung zur Bestimmung der optischen Dichte des Phasenwechselmaterials als Zustandsparameter des Wärmeisolationsbehälters (1) aufweist.

6. Isolationszeitbestimmungsvorrichtung (2) nach einem der Ansprüche 1 bis 5, **dadurch gekennzeichnet, dass** die Anzeigeeinrichtung (21) am Wärmeisolationsbehälter (1) angeordnet ist.

7. Verfahren zur Bestimmung einer mit einem Sicherheitskorrekturfaktor versehenen maximalen Isolationszeit eines Wärmeisolationsbehälters (1) mit einem Latentwärmespeicher, **dadurch gekennzeichnet, dass** aus mindestens einem Zustandsparameter des Wärmeisolationsbehälters (1) oder dessen Innenraums die im Latentwärmespeicher gespeicherte thermische Energie berechnet wird und dann aus dieser berechneten gespeicherten thermischen Energie und aus einem vorgegebenen Aussentemperaturverlauf ausserhalb des Wärmeisolationsbehälters (1) die mit einem Sicherheitskorrekturfaktor versehene maximale Isolationszeit des Wärmeisolationsbehälters (1) berechnet wird, innerhalb welcher im Innenraum des Wärmeisolationsbehälters (1) ein vorgegebener Temperaturbereich weder unterschritten noch überschritten wird.

8. Verfahren nach Anspruch 7, **dadurch gekennzeichnet, dass** der mindestens eine Zustandsparameter mindestens eine Temperatur im Innenraum des Wärmeisolationsbehälters (1) oder der elektrische Widerstand oder die optische Dichte eines Phasenwechselmaterials des Latentwärmespeichers ist.

9. Verfahren nach Anspruch 7 oder 8, **dadurch gekennzeichnet, dass** die Berechnung der mit einem Sicherheitskorrekturfaktor versehenen maximalen Isolationszeit des Wärmeisolationsbehälters (1) aus der gespeicherten thermischen Energie und aus einem vorgegebenen Aussentemperaturverlauf ausserhalb des Wärmeisolationsbehälters (1) durch vorgängige Vergleichsmessungen mit dem Wärmeisolationsbehälter (1) kalibriert wird.

10. Verfahren nach einem der Ansprüche 7 bis 9, **dadurch gekennzeichnet, dass** zur Berechnung der mit einem Sicherheitskorrekturfaktor versehenen maximalen Isolationszeit des Wärmeisolationsbehälters (1) die kleinste Zahl n berechnet wird, ab welcher

$$E_{t_0} + \sum_{i=1}^{n} \Delta E_i\big(\Delta T_i \cdot \gamma_+(\Delta T_i), \Delta t_i \cdot \gamma(\Delta t_i), \Omega \cdot \gamma(\Omega)\big) > E_{max} \cdot \gamma(E_{max})$$

erreicht wird, und durch $t_{max+} = \sum_{i=1}^{n} \Delta t_i$ eine mit einem Sicherheitskorrekturfaktor versehene maximale Isolationszeit des Wärmeisolationsbehälters $t_{max+}$ berechnet wird, innerhalb welcher im Innenraum des Wärmeisolationsbehälters eine wählbare maximal zulässige Temperatur $T_{max}$ nicht überschritten wird, wobei:

$E_{t_0}$: gespeicherte thermische Energie zum Anfangszeitpunkt $t_0$;
$E_{max}$ : maximal zulässige gespeicherte thermische Energie, welche einer wählbaren maximal zulässigen Temperatur $T_{max}$ entspricht;

$$\Delta t_i = t_i - t_{i-1};$$

$t_i$: Zeitpunkt i nach Anfangszeitpunkt $t_0$;
$\Delta T_i = T_{ex_i} - T_{in_i}$: Temperaturdifferenz zwischen Aussentemperatur $T_{ex_i}$ und Innentemperatur $T_{in_i}$ des Wärmeisolationsbehälters im Zeitintervall $\Delta t_i$, wobei bei unterschiedlichen Aussentemperaturen $T_{ex_i}$ um den Wärmeisolationsbehälter herum und/oder unterschiedlichen Innentemperaturen $T_{in_i}$ innerhalb des Wärmeisolationsbehälters im Zeitintervall $\Delta t_i$ jeweils eine Aussentemperatur $T_{ex_i}$ und eine Innentemperatur $T_{in_i}$ gewählt wird;
$\Omega$: Energiefluss vom Innenraum des Wärmeisolationsbehälters nach draussen oder umgekehrt pro Kelvin und Sekunde;
$\Delta E_i(\Delta T_i \gamma_+(\Delta T_i, \Delta t_i \cdot \gamma(\Delta t_i), \Omega \cdot y(\Omega))$: Differenz der gespeicherten thermischen Energien zu den Zeitpunkten $t_i$ und $t_{i-1}$ in Abhängigkeit von der Temperaturdifferenz $\Delta T_i$ und dem Energiefluss pro Kelvin und Sekunde $\Omega$;
$\gamma_+(\Delta T_i) \geq 1$ für positive $\Delta T_i$ und $\gamma_+(\Delta T_i \leq 1$ für negative $\Delta T_i$:

Sicherheitskorrekturfaktor für $\Delta T_i$;

$\gamma(\Delta t_i) \geq 1$: Sicherheitskorrekturfaktor für $\Delta t_i$;
$\gamma(\Omega) \geq 1$: Sicherheitskorrekturfaktor für $\Omega$;
$\gamma(E_{max}) \leq 1$: Sicherheitskorrekturfaktor für $E_{max}$.

11. Verfahren nach einem der Ansprüche 7 bis 10, **dadurch gekennzeichnet, dass** zur Berechnung der mit einem Sicherheitskorrekturfaktor versehenen maximalen Isolationszeit des Wärmeisolationsbehälters (1) die kleinste Zahl m berechnet wird, ab welcher

$$E_{t_0} + \sum_{i=1}^{m} \Delta E_i\big(\Delta T_i \cdot \gamma_-(\Delta T_i), \Delta t_i \cdot \gamma(\Delta t_i), \Omega \cdot \gamma(\Omega)\big) < E_{min} \cdot \gamma(E_{min})$$

erreicht wird, und durch $t_{max-} = \sum_{i=1}^{m} \Delta t_i$ eine mit einem Sicherheitskorrekturfaktor versehene maximale Isolationszeit des Wärmeisolationsbehälters $t_{max-}$ berechnet wird, innerhalb welcher im Innenraum des Wärmeisolationsbehälters eine wählbare minimal zulässige Temperatur $T_{min}$ nicht unterschritten wird, wobei:

$E_{t_0}$: gespeicherte thermische Energie zum Anfangszeitpunkt $t_0$;
$E_{min}$ : minimal zulässige gespeicherte thermische Energie, welche einer wählbaren minimal zulässigen Temperatur $T_{min}$ entspricht;

$$\Delta t_i = t_i - t_{i-1};$$

$t_i$: Zeitpunkt i nach Anfangszeitpunkt $t_0$;

$\Delta T_i = T_{ex_i} - T_{in_i}$: Temperaturdifferenz zwischen Aussentemperatur $T_{ex_i}$ und Innentemperatur $T_{in_i}$ des Wärmeisolationsbehälters im Zeitintervall $\Delta t_i$, wobei bei unterschiedlichen Aussentemperaturen $T_{ex_i}$ um den Wärmeisolationsbehälter herum und/oder unterschiedlichen Innentemperaturen $T_{in_i}$ innerhalb des Wärmeisolationsbehälters im Zeitintervall $\Delta t_i$ jeweils eine Aussentemperatur $T_{ex_i}$ und eine Innentemperatur $T_{in_i}$ gewählt wird;

$\Omega$: Energiefluss vom Innenraum des Wärmeisolationsbehälters nach draussen oder umgekehrt pro Kelvin und Sekunde;

$\Delta E_i(\Delta T_i \cdot \gamma\text{-}(\Delta T_i), \Delta t_i \cdot \gamma(\Delta t_i), \Omega \cdot \gamma(\Omega))$: Differenz der gespeicherten thermischen Energien zu den Zeitpunkten $t_i$ und $t_{i-1}$ in Abhängigkeit von der Temperaturdifferenz $\Delta T_i$ und dem Energiefluss pro Kelvin und Sekunde $\Omega$;

$\gamma_-(\Delta T_i \geq 1$ für negative $\Delta T_i$ und $\gamma_-(\Delta T_i \leq 1$ für positive $\Delta T_i$:

Sicherheitskorrekturfaktor für $\Delta T_i$;

$\gamma(\Delta t_i) \geq 1$: Sicherheitskorrekturfaktor für $\Delta t_i$;

$\gamma(\Omega) \geq 1$: Sicherheitskorrekturfaktor für $\Omega$;

$\gamma(E_{min}) \geq 1$: Sicherheitskorrekturfaktor für $E_{min}$.

**12.** Verfahren nach Anspruch 10, **dadurch gekennzeichnet, dass**

$$\Delta E_i(\Delta T_i \cdot \gamma_+(\Delta T_i), \Delta t_i \cdot \gamma(\Delta t_i), \Omega \cdot \gamma(\Omega)) = \Delta T_i \cdot \gamma_+(\Delta T_i) \cdot \Delta t_i \cdot \gamma(\Delta t_i) \cdot \Omega \cdot \gamma(\Omega).$$

**13.** Verfahren nach Anspruch 11, **dadurch gekennzeichnet, dass**

$$\Delta E_i(\Delta T_i \cdot \gamma_-(\Delta T_i), \Delta t_i \cdot \gamma(\Delta t_i), \Omega \cdot \gamma(\Omega)) = \Delta T_i \cdot \gamma_-(\Delta T_i) \cdot \Delta t_i \cdot \gamma(\Delta t_i) \cdot \Omega \cdot \gamma(\Omega).$$

**14.** Verfahren nach einem der Ansprüche 10 bis 13, **dadurch gekennzeichnet, dass** die Sicherheitskorrekturfaktoren und der Energiefluss vom Innenraum des Wärmeisolationsbehälters nach draussen oder umgekehrt pro Kelvin und Sekunde $\Omega$ durch vorgängige Kalibriermessungen mit dem Wärmeisolationsbehälter (1) bestimmt werden.

**15.** Verfahren nach einem der Ansprüche 7 bis 14, **dadurch gekennzeichnet, dass** die berechnete gespeicherte thermische Energie oder eine damit korrelierte Grösse und/oder die mit einem Sicherheitskorrekturfaktor versehene maximale Isolationszeit mit einer Anzeigeeinrichtung (21) angezeigt wird.

**Claims**

**1.** Insulation-time determining device (2) for a thermally insulated container (1) with a latent heat accumulator, **characterised by**:

- an energy-calculating equipment (22) for calculating the amount of thermal energy stored in the latent heat accumulator from at least one status parameter of the thermally insulated container (1) or the interior thereof,
- a display equipment (21) for displaying the calculated amount of stored thermal energy or a value correlated therewith,
- an input unit (24) for entering an external temperature progression, and
- an insulation-time calculating equipment (23), by means of which a maximum insulation time provided with a safety correction factor of the thermally insulated container (1) can be calculated from the calculated amount of stored thermal energy or a value correlated therewith and the entered external temperature progression outside the thermally insulated container (1), during which maximum insulation time a specified temperature range is neither fallen below nor exceeded in the interior of the thermally insulated container (1) .

**2.** Insulation-time determining device (2) according to claim 1, **characterised in that** the at least one status parameter is at least one temperature in the interior of the thermally insulated container (1).

**3.** Insulation-time determining device (2) according to claim 2, **characterised in that** it comprises at least one temperature sensor (25) for determining at least one temperature in the interior of the thermally insulated container (1) .

**4.** Insulation-time determining device (2) according to any one of claims 1 to 3, **characterised in that** the latent heat accumulator comprises a phase change material and the insulation-time determining device (2) comprises an equipment for determining the electric resistance of the phase change material as a status parameter of the thermally insulated container (1).

**5.** Insulation-time determining device (2) according to any one of claims 1 to 3, **characterised in that** the latent heat accumulator comprises a phase change material and the insulation-time determining device (2) comprises an equipment for determining the optical density of the phase change material as a status parameter of the thermally insulated container (1).

**6.** Insulation-time determining device (2) according to any one of claims 1 to 5, **characterised in that** the display equipment (21) is arranged at the thermally insulated container (1) .

**7.** Method for determining a maximum insulation time provided with a safety correction factor of a thermally insulated container (1) with a latent heat accumulator, **characterised in that** the amount of thermal energy stored in the latent heat accumulator is calculated from at least one status parameter of the thermally insulated container (1) or the interior thereof, following which the maximum insulation time provided with a safety correction factor of the thermally insulated container (1) is calculated from the calculated amount of stored thermal energy and a specified external temperature progression outside the thermally insulated container (1), during which maximum insulation time a specified temperature range is neither fallen below nor exceeded in the interior of the thermally insulated container (1).

**8.** Method according to claim 7, **characterised in that** the at least one status parameter is at least one temperature in the interior of the thermally insulated container (1) or the electric resistance or the optical density of a phase change material of the latent heat accumulator.

**9.** Method according to claim 7 or 8, **characterised in that** the calculation of the maximum insulation time provided with a safety correction factor of the thermally insulated container (1) from the amount of stored thermal energy and from a specified external temperature progression outside the thermally insulated container (1) is calibrated through prior comparative measurements with the thermally insulated container (1).

**10.** Method according to any one of claims 7 to 9,
**characterised in that**
for the calculation of the maximum insulation time provided with a safety correction factor of the thermally insulated container (1), the smallest number n is calculated, starting from which it applies that

$$E_{t_0} + \sum_{i=1}^{n} \Delta E_i(\Delta T_i \cdot \gamma_+(\Delta T_i), \Delta t_i \cdot \gamma(\Delta t_i), \Omega \cdot \gamma(\Omega)) > E_{max} \cdot \gamma(E_{max}),$$

and with $t_{max+} = \sum_{i=1}^{n} \Delta t_i$ a maximum insulation time provided with a safety correction factor of the thermally insulated container $t_{max+}$ is calculated, during which a selectable maximum permissible temperature $T_{max}$ is not exceeded in the interior of the thermally insulated container, wherein:

$E_{t_0}$: amount of stored thermal energy at a starting point-in-time to;
$E_{max}$: maximum permissible amount of stored thermal energy, which corresponds to a selectable maximum permissible temperature $T_{max}$;

$$\Delta t_i = t_i - t_{i-1};$$

$t_i$: point-in-time i following starting point-in-time $t_0$;
AT; $= T_{ex_i} - T_{in_i}$: temperature difference between external temperature $T_{ex_i}$ and internal temperature $T_{in_i}$ of the thermally insulated container in time interval $\Delta t_i$, wherein one external temperature $T_{ex_i}$ and one internal temperature $T_{in_i}$ each are selected for different external temperatures $T_{ex_i}$ around the thermally insulated container and/or different internal temperatures $T_{in_i}$ inside the thermally insulated container in time interval $\Delta t_i$;
$\Omega$: energy flow from the interior of the thermally insulated container to the outside or vice versa per Kelvin and second;
$\Delta E_i(\Delta T_i \cdot \gamma_+(\Delta T_i, \Delta t_i \cdot \gamma(\Delta t_i), \Omega \cdot \gamma(\Omega))$: difference of the amount of stored thermal energy at the points-in-time $t_i$

and $t_{i-1}$ depending on temperature difference $\Delta T_i$ and the energy flow per Kelvin and second $\Omega$;
$y_+(\Delta T_i) \geq 1$ for positive $\Delta T_i$ and $\gamma_+(\Delta T_i \leq 1$ for negative $\Delta T_i$: s

afety correction factor for $\Delta T_i$;

$\gamma(\Delta t_i) \geq 1$: safety correction factor for $\Delta t_i$;
$y(\Omega) \geq 1$: safety correction factor for $\Omega$;
$\gamma(E_{max}) \leq 1$: safety correction factor for $E_{max}$.

**11.** Method according to any one of claims 7 to 10,
**characterised in that**
for the calculation of the maximum insulation time provided with a safety correction factor of the thermally insulated container (1), the smallest number m is calculated, starting from which it applies that

$$E_{t_0} + \sum_{i=1}^{m} \Delta E_i\big(\Delta T_i \cdot \gamma_-(\Delta T_i), \Delta t_i \cdot \gamma(\Delta t_i), \Omega \cdot \gamma(\Omega)\big) < E_{min} \cdot \gamma(E_{min}),$$

and with $t_{max-} = \sum_{i=1}^{m} \Delta t_i$ a maximum insulation time provided with a safety correction factor of the thermally insulated container $t_{max-}$ is calculated, during which a selectable minimum permissible temperature $T_{min}$ is not fallen below in the interior of the thermally insulated container, wherein:

$E_{t_0}$: amount of stored thermal energy at a starting point-in-time $t_0$;
$E_{min}$: minimum permissible amount of stored thermal energy, which corresponds to a selectable minimum permissible temperature $T_{min}$;

$$\Delta t_i = t_i - t_{i-1};$$

$t_i$: point-in-time i following starting point-in-time $t_0$;
$\Delta T_i = T_{ex_i} - T_{in_i}$: temperature difference between external temperature $T_{ex_i}$ and internal temperature $T_{in_i}$ of the thermally insulated container in time interval $\Delta t_i$, wherein one external temperature $T_{ex_i}$ and one internal temperature $T_{in_i}$ each are selected for different external temperatures $T_{ex_i}$ around the thermally insulated container and/or different internal temperatures $T_{in_i}$ inside the thermally insulated container in time interval $\Delta t_i$;
$\Omega$: energy flow from the interior of the thermally insulated container to the outside or vice versa per Kelvin and second;
$\Delta E_i(\Delta T_i \cdot \gamma_-(\Delta T_i), \Delta t_i \cdot \gamma(\Delta t_i), \Omega \cdot \gamma(\Omega))$ : difference of the amount of stored thermal energy at the points-in-time $t_i$ and $t_{i-1}$ depending on temperature difference $\Delta T_i$ and the energy flow per Kelvin and second $\Omega$;
$y_-(\Delta T_i) \geq 1$ for negative $\Delta T_i$ and $\gamma_-(\Delta T_i \leq 1$ for positive $\Delta T_i$:

safety correction factor for $\Delta T_i$;

$\gamma(\Delta t_i) \geq 1$: safety correction factor for $\Delta t_i$;
$\gamma(\Omega) \geq 1$: safety correction factor for $\Omega$;
$Y(E_{min}) \geq 1$: safety correction factor for $E_{min}$.

**12.** Method according to claim 10, **characterised in that**

$$\Delta E_i(\Delta T_i \cdot \gamma_+(\Delta T_i), \Delta t_i \cdot \gamma(\Delta t_i), \Omega \cdot \gamma(\Omega)) = \Delta T_i \cdot \gamma_+(\Delta T_i) \cdot \Delta t_i \cdot \gamma(\Delta t_i) \cdot \Omega \cdot \gamma(\Omega).$$

**13.** Method according to claim 11, **characterised in that**

$$\Delta E_i(\Delta T_i \cdot \gamma_-(\Delta T_i), \Delta t_i \cdot \gamma(\Delta t_i), \Omega \cdot \gamma(\Omega)) = \Delta T_i \cdot \gamma_-(\Delta T_i) \cdot \Delta t_i \cdot \gamma(\Delta t_i) \cdot \Omega \cdot \gamma(\Omega).$$

**14.** Method according to any one of claims 10 to 13, **characterised in that** the safety correction factors and the energy flow from the interior of the thermally insulated container to the outside or vice versa per Kelvin and second $\Omega$ are determined by prior calibration measurements with the thermally insulated container (1).

15. Method according to any one of claims 7 to 14, **characterised in that** the calculated amount of stored thermal energy or a value correlated therewith and/or the maximum insulation time provided with a safety correction factor is displayed with a display equipment (21).

**Revendications**

1. Dispositif de détermination du temps d'isolement (2) pour un récipient à isolation thermique (1) avec un accumulateur de chaleur latente, **caractérisé par**:

   - un équipement de calcul d'énergie (22) pour calculer la quantité d'énergie thermique stockée dans l'accumulateur de chaleur latente à partir d'au moins un paramètre d'état du récipient à isolation thermique (1) ou de son intérieur,
   - un équipement d'affichage (21) pour l'affichage de la quantité d'énergie thermique stockée calculée ou d'une valeur corrélée avec celle-ci,
   - un équipement d'entrée (24) pour entrer un profil de température extérieure, et
   - un équipement de calcul de temps d'isolation (23) avec lequel un temps d'isolation maximal pourvu d'un facteur correcteur de sécurité du récipient à isolation thermique (1) peut être calculé à partir de l'énergie thermique stockée calculée ou d'une valeur corrélée avec celle-ci et du profil de température extérieure entré à l'extérieur du récipient à isolation thermique (1), pendant ledit temps d'isolation maximal une plage de température prédéterminée n'est pas dépassée ni vers le bas, ni vers le haut dans l'intérieur du récipient à isolation thermique (1).

2. Dispositif de détermination du temps d'isolement (2) selon la revendication 1, **caractérisé en ce que** le au moins un paramètre d'état est au moins une température à l'intérieur du récipient à isolation thermique (1).

3. Dispositif de détermination du temps d'isolement (2) selon la revendication 2, **caractérisé en ce qu'**il comprend au moins un détecteur de température (25) pour déterminer au moins une température à l'intérieur du récipient à isolation thermique (1).

4. Dispositif de détermination du temps d'isolement (2) selon l'une quelconque des revendications 1 à 3, **caractérisé en ce que** l'accumulateur de chaleur latente comprend un matériau à changement de phase et le dispositif de détermination du temps d'isolement (2) comprend un équipement pour déterminer la résistance électrique du matériau à changement de phase en tant que paramètre d'état du récipient à isolation thermique (1).

5. Dispositif de détermination du temps d'isolement (2) selon l'une quelconque des revendications 1 à 3, **caractérisé en ce que** l'accumulateur de chaleur latente comprend un matériau à changement de phase et le dispositif de détermination du temps d'isolement (2) comprend un équipement pour déterminer la densité optique du matériau à changement de phase en tant que paramètre d'état du récipient à isolation thermique (1).

6. Dispositif de détermination du temps d'isolement (2) selon l'une quelconque des revendications 1 à 5, **caractérisé en ce que** l'équipement d'affichage (21) est disposé au récipient à isolation thermique (1).

7. Procédé pour déterminer un temps d'isolation maximal pourvu d'un facteur correcteur de sécurité d'un récipient à isolation thermique (1) avec un accumulateur de chaleur latente, **caractérisé en ce que** l'énergie thermique stockée dans l'accumulateur de chaleur latente est calculée à partir d'au moins un paramètre d'état du récipient à isolation thermique (1) ou de son intérieur et ensuite le temps d'isolation maximal pourvu avec un facteur correcteur de sécurité du récipient à isolation thermique (1) est calculé à partir de cette énergie thermique stockée calculée et d'un profil de température extérieure prédéterminé à l'extérieur du récipient à isolation thermique (1), pendant ledit temps d'isolation maximal une plage de température prédéterminée n'est pas dépassée ni vers le bas, ni vers le haut dans l'intérieur du récipient à isolation thermique (1).

8. Procédé selon la revendication 7, **caractérisé en ce que** le au moins un paramètre d'état est au moins une température à l'intérieur du récipient à isolation thermique (1) ou la résistance électrique ou la densité optique d'un matériau à changement de phase de l'accumulateur de chaleur latente.

**9.** Procédé selon la revendication 7 ou 8, **caractérisé en ce que** le calcul du temps d'isolation maximal pourvu d'un facteur correcteur de sécurité du récipient à isolation thermique (1) à partir de la quantité d'énergie thermique stockée et d'un profil de température extérieure prédéterminé à l'extérieur du récipient à isolation thermique (1) est calibré par des mesures comparatives préalables avec le récipient à isolation thermique (1).

**10.** Procédé selon l'une quelconque des revendications 7 à 9, **caractérisé en ce que** pour le calcul du temps d'isolation maximal pourvu d'un facteur correcteur de sécurité du récipient à isolation thermique (1), le chiffre n le plus petit est calculé à partir duquel $E_{t_0} + \sum_{i=1}^{n} \Delta E_i(\Delta T_i \cdot \gamma_+(\Delta T_i), \Delta t_i \cdot \gamma(\Delta t_i), \Omega \cdot \gamma(\Omega)) > E_{max} \cdot \gamma(E_{max})$

est obtenu, et par $t_{max+} = \sum_{i=1}^{n} \Delta t_i$ un temps d'isolation maximal pourvu d'un facteur correcteur de sécurité du récipient à isolation thermique $t_{max+}$ est calculé, pendant lequel une température $T_{max}$ maximale admissible sélectionnable n'est pas dépassée vers le haut à l'intérieur du récipient à isolation thermique, dans lequel:

$E_{t_0}$: quantité d'énergie thermique stockée à un moment initial $t_0$;
$E_{max}$: énergie thermique maximale admissible stockée, qui correspond à une température $T_{max}$ maximale admissible sélectionnable;

$$\Delta t_i = t_i - t_{i-1};$$

$t_i$: moment i après le moment initial $t_0$;
$\Delta T_i = T_{ex_i} - T_{in_i}$: différence de température entre la température extérieure $T_{ex_i}$ et la température intérieure $T_{in_i}$ du récipient à isolation thermique dans l'intervalle de temps $\Delta t_i$, une température extérieure $T_{ex_i}$ et une température intérieure $T_{in_i}$ étant sélectionnées respectivement pour des températures extérieures $T_{ex_i}$ différentes autour du récipient à isolation thermique et/ou des températures intérieures $T_{in_i}$ différentes à l'intérieur du récipient à isolation thermique dans l'intervalle de temps $\Delta t_i$;
$\Omega$ : flux d'énergie de l'intérieur du récipient à isolation thermique vers l'extérieur ou inversement par Kelvin et seconde;
$\Delta E_i(\Delta T_i \cdot \gamma_+(\Delta T_i), \Delta t_i \cdot \gamma(\Delta t_i, \Omega \cdot \gamma(\Omega))$: différence des énergies thermiques stockées aux moments $t_i$ et $t_{i-1}$ en fonction de la différence de température $\Delta T_i$ et du flux d'énergie par Kelvin et seconde $\Omega$;
$\gamma_+(\Delta T_i) \geq 1$ pour des $\Delta T_i$ positives et $\gamma_+(\Delta T_i) \leq 1$ pour des $\Delta T_i$ négatives:

facteur correcteur de sécurité pour $\Delta T_i$;

$\gamma(\Delta t_i) \geq 1$: facteur correcteur de sécurité pour $\Delta t_i$;
$\gamma(\Omega) \geq 1$: facteur correcteur de sécurité pour $\Omega$;
$\gamma(E_{max}) \leq 1$: facteur correcteur de sécurité pour $E_{max}$.

**11.** Procédé selon l'une quelconque des revendications 7 à 10, **caractérisé en ce que** pour le calcul du temps d'isolation maximal pourvu d'un facteur correcteur de sécurité du récipient à isolation thermique (1), le chiffre m le plus petit est calculé à partir duquel $E_{t_0} + \sum_{i=1}^{m} \Delta E_i(\Delta T_i \cdot \gamma_-(\Delta T_i), \Delta t_i \cdot \gamma(\Delta t_i), \Omega \cdot \gamma(\Omega)) < E_{min} \cdot \gamma(E_{min})$

est obtenu, et par $t_{max-} = \sum_{i=1}^{m} \Delta t_i$ un temps d'isolation maximal pourvu d'un facteur correcteur de sécurité du récipient à isolation thermique $t_{max-}$ est calculé, pendant lequel une température $T_{min}$ minimale admissible sélectionnable n'est pas dépassée vers le bas à l'intérieur du récipient à isolation thermique, dans lequel:

$E_{t_0}$: quantité d'énergie thermique stockée à un moment initial $t_0$;
$E_{min}$ : énergie thermique minimale admissible stockée, qui correspond à une température $T_{min}$ minimale admissible sélectionnable;

$$\Delta t_i = t_i - t_{i-1};$$

$t_i$ : moment i après le moment initial $t_0$;
$\Delta T_i = T_{ex_i} - T_{in_i}$: différence de température entre la température extérieure $T_{ex_i}$ et la température intérieure $T_{in_i}$

du récipient à isolation thermique dans l'intervalle de temps $\Delta t_i$, une température extérieure $T_{ex_i}$ et une température intérieure $T_{in_i}$ étant sélectionnées respectivement pour des températures extérieures $T_{ex_i}$ différentes autour du récipient à isolation thermique et/ou des températures intérieures $T_{in_i}$ différentes à l'intérieur du récipient à isolation thermique dans l'intervalle de temps $\Delta t_i$;

Q : flux d'énergie de l'intérieur du récipient à isolation thermique vers l'extérieur ou inversement par Kelvin et seconde;

$\Delta E_i(\Delta T_i \cdot \gamma_-(\Delta T_i), \Delta t_i \cdot \gamma(\Delta t_i), \Omega \cdot \gamma(\Omega))$: différence des énergies thermiques stockées aux moments $t_i$ et $t_{i-1}$ en fonction de la différence de température $\Delta T_i$ et du flux d'énergie par Kelvin et seconde $\Omega$;

$\gamma_-(\Delta T_i) \geq 1$ pour des $\Delta T_i$ négatives et $\gamma_-(\Delta T_i) \leq 1$ pour des $\Delta T_i$ positives:

facteur correcteur de sécurité pour $\Delta T_i$;

$\gamma(\Delta t_i) \geq 1$: facteur correcteur de sécurité pour $\Delta t_i$;
$\gamma(\Omega) \geq 1$: facteur correcteur de sécurité pour $\Omega$;
$\gamma(E_{min}) \leq 1$: facteur correcteur de sécurité pour $E_{min}$.

**12.** Procédé selon la revendication 10, **caractérisé en ce que**

$$\Delta E_i(\Delta T_i \cdot \gamma_+(\Delta T_i), \Delta t_i \cdot \gamma(\Delta t_i), \Omega \cdot \gamma(\Omega)) = \Delta T_i \cdot \gamma_+(\Delta T_i) \cdot \Delta t_i \cdot \gamma(\Delta t_i) \cdot \Omega \cdot \gamma(\Omega).$$

**13.** Procédé selon la revendication 11, **caractérisé en ce que**

$$\Delta E_i(\Delta T_i \cdot \gamma_-(\Delta T_i), \Delta t_i \cdot \gamma(\Delta t_i), \Omega \cdot \gamma(\Omega)) = \Delta T_i \cdot \gamma_-(\Delta T_i) \cdot \Delta t_i \cdot \gamma(\Delta t_i) \cdot \Omega \cdot \gamma(\Omega).$$

**14.** Procédé selon l'une quelconque des revendications 10 à 13, **caractérisé en ce que** les facteurs correcteurs de sécurité et le flux d'énergie depuis l'intérieur du récipient à isolation thermique vers l'extérieur ou inversement par Kelvin et seconde $\Omega$ sont déterminés par des mesures de calibrage préalables avec le récipient à isolation thermique (1).

**15.** Procédé selon l'une quelconque des revendications 7 à 14, **caractérisé en ce que** l'énergie thermique stockée calculée ou une valeur corrélée avec celle-ci et/ou le temps d'isolation maximal pourvu d'un facteur correcteur de sécurité est affiché par un équipement d'affichage (21).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012142639 A1
- AT 382636 B
- EP 2482021 A2